# EUROPÄISCHE PATENTSCHRIFT

(11) **EP 0 832 795 B1**
(45) Veröffentlichungstag und Bekanntmachung des Hinweises auf die Patenterteilung: **07.05.2003**
(21) Anmeldenummer: 97116252.4
(22) Anmeldetag: 18.09.1997
(51) Int. Cl.: B60R 21/22

(54) **Schutzeinrichtung für Fahrzeuginsassen**
Restraint device for a vehicle passenger
Dispositif de protection pour passager de véhicule

(30) Priorität: 27.09.1996 DE 29616904 U
(43) Veröffentlichungstag der Anmeldung: 01.04.1998
(73) Patentinhaber: TRW Occupant Restraint Systems GmbH & Co. KG, 73551 Alfdorf (DE)
(72) Erfinder: Neidert, Rudolf, 36154 Hosenfeld (DE)
(74) Vertreter: Kitzhofer, Thomas, Dipl.-Ing.

(56) Entgegenhaltungen:
- DE-U- 29 605 896
- DE-U- 29 614 201
- GB-A- 2 297 950
- US-A- 5 470 103

## Beschreibung

Die Erfindung betrifft eine Schutzeinrichtung für Fahrzeuginsassen, mit einem aufblasbaren Kopf-Seitengassack, der sich von der A-in Richtung zur B-Säule des Fahrzeugs erstreckt.

Aus der gattungsgemäßen US-A-5 470 103 ist eine Schutzeinrichtung für Fahrzeuginsassen bekannt, bei der ein überdimensional großer Gassack vorgesehen ist, der in Draufsicht die Form eines umgelegten "E" hat. Die Schenkelabschnitte erstrecken sich dabei seitlich der Insassen, wobei der mittlere Schenkelabschnitt zwischen die Insassen ragt, um einen Zusammenstoß der Köpfe zu verhindern. Der Kopf des Insassen wird also von drei Seiten umgeben. Der Gassack ist aufgrund seiner Form und Ausmaße schwer zu fertigen und schwer im Fahrzeug unterzubringen.

Eine Schutzeinrichtung, die den Kopf eines Fahrzeuginsassen bei einem' Seitenaufprall vor dem Kontakt mit der Seitenscheibe schützen soll, ist aus der DE 296 05 896 bekannt. Der dabei vorgesehene Kopf-Seitengassack ist an seinem vorderen und hinteren Ende an der A- bzw. C-Säule befestigt und deckt die beiden Seitenscheiben und die B-Säule ab.

Seitenaufprall-Schutzeinrichtungen bieten jedoch nur einen Schutz bei einem Aufprall, der in einer Richtung von 90° ±30° zur Fahrzeuglängsachse erfolgt. Bei einem Frontalaufprall oder einem Aufprall im Winkel von 0° ±60° zur Fahrzeuglängsachse soll der herkömmliche Fahrer- oder Beifahrer-Gassack Schutz bieten. Bei einem versetzten Frontalaufprall, bei dem der auf das Fahrzeug einwirkende Impuls nicht im Bereich der Fahrzeugmitte ins Fahrzeug eingeleitet wird, oder bei einem Frontalaufprall von schräg vorn kann es jedoch möglich sein, daß der Fahrzeuginsasse am Fahrer- oder Beifahrer-Gassack vorbeigleitet und Kopfkontakt mit der A-Säule hat.

Die Erfindung schafft eine Schutzeinrichtung für Fahrzeuginsassen, die die Gefahr von Kopfverletzungen bei einem versetzten Frontalaufprall oder einem Aufprall von schräg vorn erheblich reduziert und einfach aufgebaut ist. Dies wird durch eine Schutzeinrichtung nach, Anspruch 1 gelöst. Die A-Säule, die bei vielen bislang bekannten Seitenaufprall-Schutzeinrichtungen nur als Verankerungsstelle für den Seitengassack dient, wird bei der erfindungsgemäßen Schutzeinrichtung durch den Kopf-Seitengassack wenigstens großteils abgedeckt.

Bei der erfindungsgemäßen Schutzeinrichtung ist der Gassack ein Mehrkammergassack und der vordere Abschnitt wird durch eine separate Kammer gebildet. Diese kann entweder mit der oder den übrigen Kammern des Gassacks strömungsmäßig verbunden oder abgetrennt von diesen sein, so daß entsprechend ein mehrstufiger Gasgenerator zum Aufblasen der Kammern bzw. ein eigener Gasgenerator für die Kammer, die die A-Säule abdeckt, vorgesehen ist. Beim Vorsehen von mehreren Gasgeneratoren besteht der Vorteil, daß abhängig von der Art des Aufpralls entweder die die Seitenscheibe abdeckende oder die die A-Säule abdeckende Kammer aufgeblasen wird. In Grenzbereichen, insbesondere bei einem Aufprall in einem Winkel von etwa 60° zur Fahrzeuglängsachse werden beide Kammern aufgeblasen.

Ferner ist bei der bevorzugten Ausführungsform vorgesehen, daß sich der aufgeblasene Kopf-Seitengassack bis zur C-Säule des Fahrzeugs erstreckt und damit für Front- und Heckinsassen gleichermaßen Schutz bietet.

Weitere Merkmale und Vorteile der Erfindung ergeben sich aus der nachfolgenden Beschreibung bevorzugter Ausführungsformen und aus den Zeichnungen, auf die Bezug genommen wird. In den Zeichnungen zeigen:
- Fig. 1 eine Seitenansicht einer ersten Ausführungsform der erfindungsgemäßen Schutzeinrichtung, mit einem Kopf-Seitengassack, bei dem sämtliche Kammern aufgeblasen sind;
- Fig. 2 die in Fig. 1 gezeigte Schutzeinrichtung, bei der nur die vordere Kammer aufgeblasen ist; und
- Fig. 3 eine Seitenansicht einer zweiten Ausführungsform der erfindungsgemäßen Schutzeinrichtung.

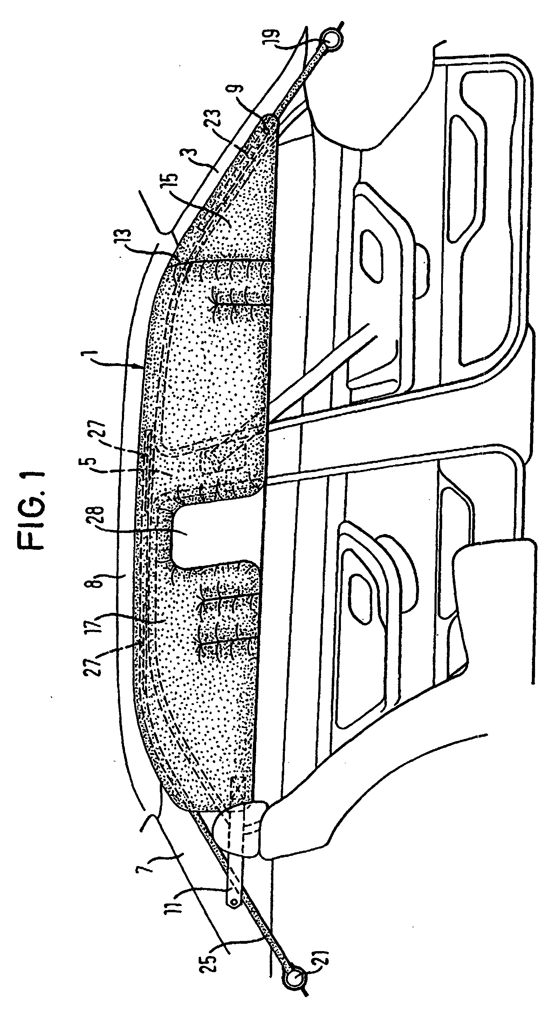

In Fig. 1 ist eine Schutzeinrichtung für Fahrzeuginsassen gezeigt, die einen Kopf-Seitengassack 1 umfaßt, welcher sich in aufgeblasenem Zustand von der A-Säule 3 über die B-Säule 5 bis zur C-Säule 7 erstreckt. Im nicht aufgeblasenen Zustand ist der Gassack 1 unter der Verkleidung der A- und der C-Säule sowie des seitlichen Dachholms 8 versteckt angeordnet. Im Bereich seines vorderen und hinteren unteren Endes ist der Gassack 1 über eine Öse 9 bzw. ein Band 11 mit der A-Säule 3 bzw. der C-Säule 7 verbunden. Ferner sind nicht gezeigte Arretiermittel im Bereich des oberen Randes des Gassacks 1 vorgesehen, wo dieser am Dachholm 8 befestigt ist. Der Gassack 1 weist zwei Kammern auf, die durch eine Wand 13 voneinander getrennt sind. Die vordere Kammer 15, die den vorderen Abschnitt des Gassacks 1 bildet, erstreckt sich in aufgeblasenem Zustand über die A-Säule 3 und verhindert, daß bei einem versetzten Frontalaufprall oder bei einem Aufprall von schräg vorn der Kopf des Insassen Kontakt mit der A-Säule 3 bekommen kann. Die hintere Kammer 17 erstreckt sich über die vordere Seitenscheibe, die B-Säule 5 und die hintere Seitenscheibe bis zur C-Säule 7. Die hintere Kammer 17 bietet insbesondere Schutz für den Kopf des Insassen bei einem Seitenaufprall, der unter einem Winkel von 90° ±30° zur Fahrzeuglängsachse stattfindet. Unmittelbar hinter der B-Säule 5 weist die hintere Kammer 17 eine großflächige Ausnehmung 28 auf. Da sich der Kopf des Fahrzeugheckinsassen selbst bei einem Aufprall von schräg vorn nicht in diesem Bereich bewegen kann, kann der Kopf-Seitengassack 1 zur Verringerung des aufzublasenden Volumens in diesem Bereich ausgespart sein.

Zum Aufblasen des Gassacks 1 bei einem Unfall ist für jede Kammer 15, 17 ein separater Gasgenerator 19 bzw. 21 vorgesehen. Der Gasgenerator 19 für die vordere Kammer 15 ist im seitlichen Bereich des Armaturenbretts angeordnet. Ein Strömungskanal 23 verbindet den Gasgenerator 19 mit dem Inneren der Kammer 15.

Der im Bereich des unteren Endes der C-Säule 7 angeordnete Gasgenerator 21 steht über einen Strömungskanal 25, der bis in den Dachholm 8 reicht und großflächige Ausströmöffnungen 27 aufweist, mit dem Inneren der Kammer 17 in Verbindung.

Der in Fig. 1 gezeigte vollständig aufgeblasene Gassack 1 hat eine großflächige, kissenförmige Gestalt und schützt den Kopf des Fahrzeuginsassen vor dem Aufprall auf die A-Säule 3, den Dachholm 8, die Seitenscheiben, die B-Säule 5 und die C-Säule 7 sowohl bei einem versetzten Frontalaufprall, d.h. bei einer Impulseinleitung unter einem Winkel von 0° zur Fahrzeuglängsachse, jedoch versetzt zu dieser, als auch bei einem Seitenaufprall unter 90° zur Fahrzeuglängsachse und darüber.

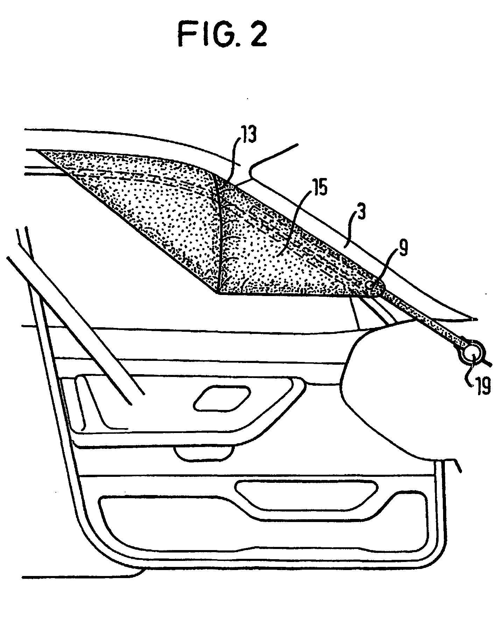

Die vordere Kammer 15, die zum Abdecken der A-Säule 3 dient, kann unabhängig von der hinteren Kammer 17 aufgeblasen werden. Dazu ist ein nicht gezeigter eigener Auslösesensor für den Gasgenerator 19 vorgesehen, der die Zündung des Gasgenerators 19 bei einem versetzten Frontalaufprall oder einem Aufprall von schräg vorn auslöst. Der Sensor kann dabei einen Seitenaufprall bis unter einen Winkel von 60° zur Fahrzeuglängsachse erfassen. Da der entsprechende Sensor für den Gasgenerator 21 so angeordnet ist, daß er einen Seitenaufprall unter einem Winkel von 90° ± etwa 40° erfassen kann, gibt es Unfälle, bei denen nur die vordere Kammer 15 aufgeblasen wird, wie in Fig. 2 gezeigt ist, bei denen beide Kammern 15, 17 aufgeblasen werden, wie in Fig. 1 gezeigt ist, oder bei denen nur die hintere Kammer 17 aufgeblasen wird (nicht gezeigt).

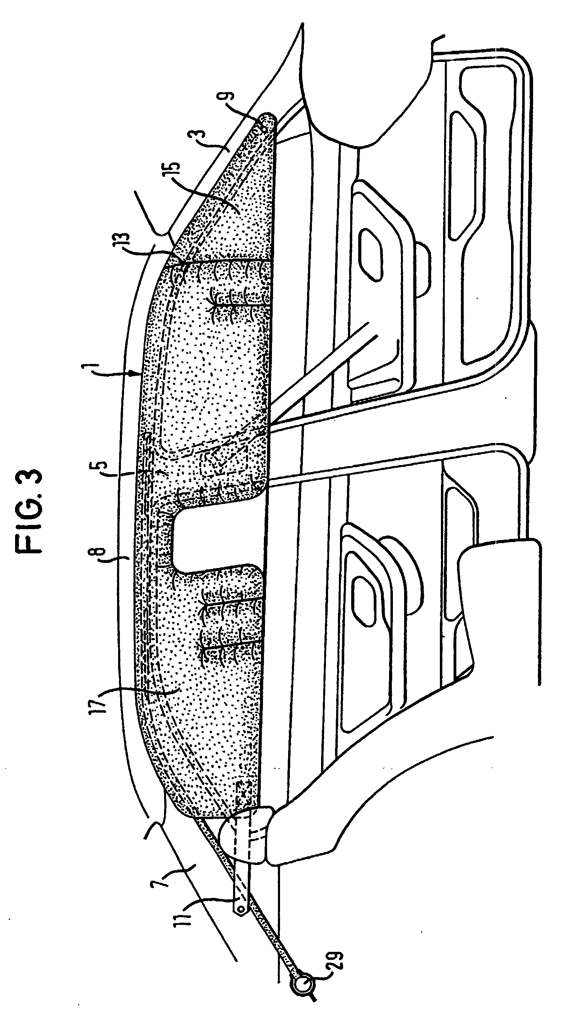

Die in Fig. 3 gezeigte Ausführungsform entspricht weitgehend der in den vorherigen Figuren gezeigten Ausführungsform. Als Unterschied zu der zuerst beschriebenen Ausführungsform ist nur ein Gasgenerator 29 vorgesehen, der jedoch als Mehrstufengasgenerator ausgebildet ist, so daß der Gasgenerator 19 entfällt. Die Wand 13 weist mehrere Durchtrittsöffnungen (nicht gezeigt) auf, die ab einem bestimmten Gassackinnendruck geöffnet werden. Je nachdem, ob eine oder beide Kammern 15, 17 aufgeblasen werden sollen, wird eine oder mehrere Stufen des Gasgenerators 29 gezündet, so daß nur die Kammer 17 oder auch zusätzlich die Kammer 15 aufgeblasen wird.

## Patentansprüche

1. Schutzeinrichtung für Fahrzeuginsassen, mit einem aufblasbaren Kopf-Seitengassack (1), der sich von der A- bis wenigstens zur B-Säule (3, 5) des Fahrzeugs erstreckt, **dadurch gekennzeichnet, daß** der Kopf-Seitengassack (1) in aufgeblasenem Zustand eine großflächige, kissenförmige Gestalt einnimmt, und daß der Kopf-Seitengassack (1) ein Mehrkammer-Seitengassack ist, dessen vorderer Abschnitt durch eine separate Kammer (15) gebildet ist, die in aufgeblasenem Zustand die A-Säule (3) wenigstens großteils abdeckt und bei einem versetzten Frontaufprall oder einem Aufprall von schräg vorn einen Kopfkontakt mit ihr verhindert.

2. Schutzeinrichtung nach Anspruch 1, **dadurch gekennzeichnet, daß** die Kammer (15) zur Abdeckung der A-Säule (3) von der oder den übrigen Kammern (17) abgetrennt ist und durch einen eigenen Gasgenerator (19) aufgeblasen wird.

3. Schutzeinrichtung nach Anspruch 2, **dadurch gekennzeichnet, daß** bei einem versetzten Frontalaufprall oder einem Aufprall von schräg vorn nur die Kammer (15) zur Abdeckung der A-Säule (3) aufgeblasen wird.

4. Schutzeinrichtung nach Anspruch 1, **dadurch gekennzeichnet, daß** die Kammer (15) zur Abdeckung der A-Säule (3) mit der oder den übrigen Kammern strömungsmäßig verbunden ist und daß ein mehrstufiger Gasgenerator (29) vorgesehen ist.

5. Schutzeinrichtung nach einem der vorstehenden Ansprüche, **dadurch gekennzeichnet, daß** sich der aufgeblasene Kopf-Seitengassack (1) bis zur C-Säule (7) des Fahrzeugs erstreckt.

6. Schutzeinrichtung nach einem der vorstehenden Ansprüche, **dadurch gekennzeichnet, daß** der Kopf-Seitengassack (1) im gefalteten Zustand unter der Verkleidung des Dachholms (8) angeordnet ist, sich bis unter die Verkleidung der A-Säule (3) erstreckt und im Bereich seines vorderen und hinteren unteren Endes mit der A- bzw. der C-Säule (3; 7) verbunden ist.

## Claims

1. A protection device for vehicle occupants, comprising an inflatable head-side gas bag (1) extending from the A-pillar (3) as far as to at least the B-pillar (5) of the vehicle, **characterized in that** the head-side gas bag (1) in the inflated condition assumes a spacious, cushion-shaped configuration and that the head-side gas bag (1) is a multi-chamber side gas bag, the front section of which is formed by a separate chamber (15) which in the inflated condition covers the A-pillar (3) at least to a major extent and in the case of an offset head-on collision or a skew front-end collision prevents head contact with the A-pillar (3).

2. The protection device as set forth in claim 1, **characterized in that** the chamber (15) for covering the A-pillar (3) is separated from the remaining chamber or chambers (17) and is inflated by its own gas generator (19).

3. The protection device as set forth in claim 2, **characterized in that** in the case of an offset head-on collision or a skew front-end collision only the chamber (15) for covering the A-pillar (3) is inflated.

4. The protection device as set forth in claim 1, **characterized in that** the chamber (15) for covering the A-pillar (3) is in flow connection with the remaining chamber or chambers and that a multi-stage gas generator (29) is provided.

5. The protection device as set forth in any of the preceding claims, **characterized in that** the inflated head-side gas bag (1) extends as far as to the C-pillar (7) of the vehicle.

6. The protection device as set forth in any of the preceding claims, **characterized in that** the head-side gas bag (1) is arranged in the folded condition under the lining of the roof pillar (8), extends as far as to beneath the lining of the A-pillar (3) and is connected in the region of its front and rear lower ends with the A-pillar (3) and C-pillar (7), respectively.

## Revendications

1. Système de protection pour les passagers d'un véhicule, comportant un sac à gaz latéral de tête (1) gonflable, qui s'étend depuis la colonne A jusqu'au moins la colonne B (3, 5) du véhicule, **caractérisé en ce que** le sac à gaz latéral de tête (1) prend, à l'état gonflé, une forme de coussin offrant une grande surface, et **en ce que** le sac à gaz latéral de tête (1) est un sac à gaz latéral à plusieurs chambres dont la section antérieure est formée par une chambre (15) séparée qui, à l'état gonflé, recouvre au moins une grande partie de la colonne A (3) et, dans le cas d'un choc frontal décalé ou d'un choc venant obliquement depuis l'avant, empêche la tête d'entrer en contact avec cette colonne.

2. Système de protection selon la revendication 1, **caractérisé en ce que** la chambre (15) est séparée pour recouvrir la colonne A (3) de la ou des chambres (17) restantes et est gonflée par un générateur de gaz (19), qui lui est propre.

3. Système de protection selon la revendication 2, **caractérisé en ce que** dans le cas d'un choc frontal décalé ou d'un choc venant obliquement depuis l'avant, seule la chambre (15) est gonflée pour recouvrir la colonne A (3).

4. Système de protection selon la revendication 1, **caractérisé en ce que** pour recouvrir la colonne A (3), la chambre (15) est reliée en écoulement avec la ou les chambres restantes et **en ce qu'**il est prévu un générateur de gaz (29) à plusieurs étages.

5. Système de protection selon l'une des revendications précédentes, **caractérisé en ce que** le sac à gaz latéral de tête (1) gonflé s'étend jusqu'à la colonne C (7) du véhicule.

6. Système de protection selon l'une des revendications précédentes, **caractérisé en ce que** le sac à gaz latéral de tête (1), à l'état replié, est agencé sous le revêtement du longeron de toit (8), s'étend jusque sous le revêtement de la colonne A (3) et est relié, dans la zone de ses extrémités antérieure et postérieure, aux colonnes A et C (3 ; 7), respectivement.
